# EUROPEAN PATENT APPLICATION

(11) **EP 1 158 761 A1**
(43) Date of publication of application: **28.11.2001**
(21) Application number: 00116220.5
(22) Date of filing: 04.08.2000
(51) Int. Cl.: H04N 1/028

(54) **Photographic image acquisition device using led chips**

(30) Priority: 26.05.2000 EP 00110974
(71) Applicant: GRETAG IMAGING Trading AG, 5430 Wettingen (CH)
(72) Inventor: Lehmann, Mathias, 8044 Zürich (CH); Amsler, Werner, 8057 Zürich (CH)
(74) Representative: Schwabe - Sandmair - Marx

(57) **Abstract**

Photographic image acquisition device comprising a light source, a photographic medium positioning member for positioning a photographic medium at a predefined position, a projecting lens for projecting the photographic medium on a detecting member for exposing said detecting member, wherein the light source comprises a LED chip array having a plurality of LED chips and a light transmitting and averaging member is provided between the LED chip array and the predefined position.

## Description

The present invention relates to a photographic image acquisition device according to the preamble of claim 1. The acquisition device of the present invention optically acquires photographic image information photographically recorded on a photographic medium (e.g. film) by detecting light transmitted through the photographic medium (e.g. film) or reflected from the photographic medium (e.g. photographic paper). An example for a photographic image acquisition device is a photographic copying device, which copies, for instance, the image information on the photographic medium to another photographic medium or to plain paper. Such a device is also called photographic printer. Another example for a photographic copying device is a photographic scanner, which scans the photographic medium in order to acquire the image information on the photographic medium. The acquired image information may then be (digitally) processed and printed.

Common photographic image acquisition devices use a white light source like a tungsten halogen lamp in combination with filters. By means of the filters, different colors are generated in order to scan or copy a photographic original. In order to generate the different colors in a sequence, rotating filter wheels and shutters are used.

Object of the present invention is to achieve a fast image acquisition while keeping the mechanical construction simple.

The afore-mentioned object is solved by the subject matter of claim 1. Dependent claims are directed to embodiments of advantage.

Advantageously the photographic image acquisition device uses a plurality of LED chips in connection with a light transmitting and averaging member. In this way a compact but inexpensive photographic image acquisition device may be achieved which allows for short exposure times. The plurality of LED chips represent a plurality of light emitting spots. In order to homogenize the light from the different LED chips a light transmitting and averaging member is provided according to the present invention. An example for such a light transmitting and averaging member is a diffusor like a scattering disk or a diffuser comprising a holographic grating. That means, the light transmitting and averaging means receives light, homogenizes or averages the received light by means of scattering and/or diffraction and outputs light with a homogenized intensity profile. Advantageously the spatial averaging and homogenizing characteristic is adapted to the spatial distribution of the LED chips such that a optimum homogenizing effect is achieved. In particular the (spatial) structure of the holographic grating may be adapted to the spatial distribution of the LED chips on the array. The light transmission of the averaging member is preferably such that the direction of the overall light flux is not deflected by the averaging member. This allows to achieve a compact structure. Preferably the angle of radiation of the light issuing from the averaging member is below 180° more preferably below 90°.

According to the invention, LED chips are used as a light source. The LED chips correspond to the semiconductive part of conventional LEDs (light emitting diodes). This semiconductive part generates the light. Conventional LEDs have a lens body in which a LED chip is integrated. A drawback of the lens body is that the package density or the number of LED chips per unit area is reduced due to the size of the lens body. The present invention increases the number density of LED chips by omitting the lens body and arranging the LED chips on a substrate. Conventional LEDs have a diameter of 3-5 mm, while LED chips typically have a size of 0,2-0,5 mm. Preferably the LED chips are arranged on the substrate such that the distance between the different LED chips is smaller than four or two times the diameter of one LED chip and more preferably smaller than or approximately as large as one diameter of a LED chip. In this way a high light intensity per unit area may be achieved. A high light intensity is necessary in order to scan or copy the photographic original in a short time in order to increase the through-put of photographic originals or photographic mediums, the image information of which is to be optically acquired.

A drawback of the plurality of LED chips for scanning or copying a photographic original is that there is a inhomogeneous light intensity profile due to their spatial distribution which may lead to artifacts in the copying or scanning process.

In order to minimize or eliminate such artifacts, the photographic image acquisition device of the present invention comprises the above-mentioned light transmitting and averaging member. The light transmitting and averaging member may be passive or active. If it is passive, the light transmitting and averaging characteristics of the light transmitting and averaging member is constant. If it is active, the light transmitting and averaging characteristic may be controlled. For the latter purpose a liquid crystal matrix may be used which allows for spatially controllable light scattering such that the scattering pattern of the liquid crystal matrix may be optimally adapted to the spatial arrangement of the (light-emitting) LED chips and synchronized with the timing of addressing of different kinds or colors of LED chips which emit light at a particular time. The control and structure of a liquid crystal matrix is disclosed in EP 0 981 066 and US 09/372,610, and US 4,050,814, the disclosure thereof is incorporated in the present application by reference.

Since the light transmitting and averaging member is transmissive, a compact and simple structure of the acquisition device may be achieved. The light transmitting and averaging member (in the following short: averaging member) of the present invention is preferably constituted such that an overlapping of the light emerging from adjacent LED chips is achieved. The scattering characteristic of the averaging member and its position relative to the LED chip array is chosen based on the distance between the LED chips having the same color, the light emission intensity of the LED chips and/or its angular distribution. Furthermore the characteristic and position of the averaging member may depend on the use of lenses between the averaging member and the LED chip array and reflective elements as will be discussed below. Preferably the averaging member is chosen and arranged such that the intensity variation of the light profile output by the averaging member is less than 10%. If a sufficiently high light intensity is available, one may design the light averaging member to provide even a better homogeneity. The actual choice will always be a tradeoff between intensity and homogeneity.

In order to concentrate the light intensity emitted by the LED chips in forward direction towards the photographic original to be scanned or copied, different optical members such as diffractive members (e.g. lenses) or reflective members (mirrors) may be used. Preferably a micro lens array is employed to concentrate the light in forward direction. The micro lens array comprises a plurality of lenses. Preferably each lens of the micro lens array is assigned to one LED chip in order to collect the light emitted by the assigned LED chip and to direct the light in forward direction. Alternatively or additionally a light guiding and reflecting member (e.g. a focusing hood) may be provided for this purpose, which reflects the light such that it is directed or guided in forward direction towards the photographic original or a light collecting element as stated below.

The photographic image acquisition device of the present invention preferably comprises a light collecting element like a condenser lens, a holding member for holding a photographic medium, e.g. a stage for supporting e.g. a film to be illuminated in a predefined position, where the photographic medium is illuminated by the light coming from the light collecting element. The light is modulated by the photographic medium due to reflection or transmission of the light. The modulated light is projected by means of a projecting lens on a detecting member. For instance, the detecting member, may be a photochemical converter such as a light sensitive photographic paper or a photoelectric converter like a CCD.

Preferably, the averaging member is arranged such that it is between the LED chip array and the light collecting element. The light collecting element is positioned such that the averaging member acts as a secondary light source. In other words, the light collecting element and the averaging member is positioned such that the light collecting element preferably collects at least most of the light, which is transmitted and homogenized by the averaging member. The light collecting element is arranged such that the collected light is guided through the projecting lens. Preferably, the output of the averaging member is at least approximately imaged by the light collecting element into the entrance pupil of the projecting lens.

In order to sufficiently homogenize the light emitted from the plurality of LED chips, the distance between the averaging member and the LED chip array is preferably greater than the individual distances of the LED chips or the pitch of the LED chip arrangement of LED chips having the same color.

The LED arrays may be constituted such that they comprise LED chips all of the same color or of different colors. If the array comprises LED chips of different colors, there are preferably groups of LED chips, wherein in each group there is a plurality of LED chips having the same color or spectral emission characteristic. Preferably a "multicolor" array comprises at least three or four groups of different colors (e.g. blue, red, green, and infrared).

The LED chips of one (color) group are preferably connected in series on the substrate. In this way the LED chips of one group may be easily addressed at the same time. LED chips of different color usually have a different driving voltage. In order to achieve a suitable layout for the arrangement of the LED chips on a substrate, which arrangement allows to address a plurality of LED chips having the same color at the same time, the number of LED chips in one series is set to a fixed number. This fixed number and the driving voltage is chosen that a driving of LED chips of the color having the highest driving voltage is still possible, i.e. all LED chips series may be driven by the same driving voltage, even if of different color.

In order to spectrally acquire the image information on the photographic medium (photographic original), the photographic medium is preferably illuminated in a sequence by LED chips of different color. The LED chips of different color may be arranged on one and the same LED chip array or may be distributed on different arrays. The distribution may be such that only LED chips of one color are assigned to one LED array. The sensitivity of the detecting member usually varies over the spectral range. Furthermore the intensity emitted by the LED chips varies in dependence on the color of the LED chips. In order to achieve a balanced exposure for all colors, it could be necessary to make the exposure time for one color very long while for other colors rather short. However, this results in an increase of the total time of exposure. In order to decrease the total time of exposure, the ratio between the numbers of LED chips of each color is preferably chosen such that the sum of all color specific exposure times is minimized.

If the LED array comprises LED chips of different colors, the LED chips of at least most of the different colors are preferably arranged such that the LED chips of the different colors are mixed. This mixing is preferably such that the color distribution is balanced and/or the distance between LED chips of the same color is minimized and the distance of a LED chip of a certain color to at least one further LED chips of another color is minimized. This applies preferably at least for the major part of the array, in particular for the central part. In other words, the LED chips are arranged such that in any arbitrarily chosen sub-array consisting of several LED chips of different color, there is an approximately constant relationship between the number of LED chips of one color to the number of LED chips of another color. Preferably the, relationship between the numbers of LED chips of different colors in a sub-array is chosen that the total time of exposure is minimized. Additionally the layout of the electrical contacts to the respective LED chips, the parallel and serial arrangement has to be considered when the afore-mentioned mixing is performed in order to find the best compromise.

According to another embodiment of the invention, more than one LED chip array is provided. Preferably LED chips of different colors are assigned to the different LED chip arrays. Preferably the LED chip arrays of one particular color are only arranged on one LED chip array. For instance, a LED chip array for blue, another one for green and a third one for red is provided. A LED chip array may comprise more than one kind of LED chip. For instance, a LED chip array may comprise both LED chips emitting red light in the visible spectral range and LED chips which emit infrared light.

The light of LED chips of different arrays and of different color is preferably combined by means of a spectrally sensitive reflector or beam splitter. The spectrally sensitive reflector is constituted such that it reflects the light of LED chips of a certain color and lets pass the light of LED chips of another color. Preferably the arrays and the reflector are arranged such that the path of the light from one array to the light collecting element is the same as the path length of the light from the other array to the light collecting element. A possible arrangement is a cube like or rectangular structure where the arrays represent the side walls of the cube or rectangle and the spectral sensitive reflectors are diagonal planes of the cube. In this way a most compact and very intensive light source may be implemented. This kind of light source may in particular be used in the photographic image acquisition device of the present invention. However, other fields of usage are possible.

Concerning multicolored arrays, the number of LED chips of a certain color is usually small in comparison to the number of LED chips of another color. In this case, the LED chips having a small number, are preferably more concentrated in the center of the array since a homogeneous distribution of the colors in the center is more important than in the margin of the array.

The LED chips are preferably mounted on a substrate by bonding or SMT (Surface Mounting Technologies). Preferably the thermal resistance between the substrate and the LED chip is as small as possible, e.g. smaller than 10 Kcm²/W, preferably smaller than 1 Kcm²/W. If the LED chip is adhered to the substrate by means of a silver adhesion agent, the thermal resistance is preferably less than 0,3 Kcm²/W. This value is proportional to the thickness of the adhesion layer. This thickness may be between 10 and 100 µm. Because of the small contact area per unit LED chip area, a low thermal resistance is very important.

Preferably the LED chips are not integrally made with the substrate, i.e. no single wafer structure, in order to be able to choose a substrate having optimal thermal conductivity properties. Preferably the substrate has better thermal conductivity properties than semiconductive material in particular that used for the production of LED chips. Preferably the substrate comprises electrically conductive parts or tracks which electrically contact the chips. The remaining part or bulk of the substrate is preferably heat conductive but electrically isolating. Preferably the bulk or body of the substrate is not a semiconductor. The bulk or body of the substrate may be of ceramic or diamond-like material.

The dissipation of the heat from the substrate may be achieved by conventional heat sinks, by fans or ventilators or by means of a cooling liquid. The heat sink is preferably in thermal contact with the back side of the substrate. The thermal contact between the substrate and a heat sink may be improved by means of thermal conductive foils or greases. The specific thermal conductive resistance should be less than 0,3 Kcm²/W. The thickness of the thermal conductive foils is preferably below 0,1 mm. Because the heat transfer occurs predominantly vertically through the substrate, the thickness of the substrate should be very small, preferably less than 1 mm or less than 0,5 mm.

The better the heat conductive properties of the LED chip array, the higher the maximum current (or duty cycle) which may be applied to a single LED chip and the higher the light intensity.

The surface of the substrate on which the LED chips are attached, may be constituted such that light of the LED chips is reflected. For this purpose the substrate may be either of white material or be coated with a thin light reflective layer. In case the substrate surface is designed to specularly reflect light, this surface may contain local height variations around the LED ships in order to increase the amount of light emitted in forward direction.

The output of the averaging member is preferably projected by the light collecting element (condenser lens) onto the entrance pupil of the projecting lens such that its image is larger than the entrance pupil. Also in view of this, a homogeneous color distribution or mixture of the different LED chips in particular in the center of the LED chip array is important.

Preferably, as mentioned above, the LED chips are addressed color by color in a sequence. For this purpose the LED chips of one and the same color are grouped together. If the detecting member is a photoelectric converter and not a photochemical converter like a photosensitive photographic paper, the read out of signals from the photoelectric converter is preferably synchronized with the addressing of LED chips of different colors. In this way each signal may be assigned to a certain color.

If a detecting member is used, which is able to differentiate between different colors, e.g. a photochemical converter such as a photosensitive paper or a color sensitive CCD, LED chips of different colors are preferably addressed at the same time in order to minimize the exposure time and to increase the scanning or copying speed of the photographic image acquisition device. The ratio between the numbers of chips of the different color optimizing the total exposure time will then not be the same as in the case of sequential acquisition.

If necessary, the spectrum emitted by a LED chip array may be adapted or changed by means of filters. In particular the infrared part of a spectrum may be changed or blocked.

Since the filter characteristic of a filter, in particular interference filter, depends on the angle of incidence of the light, the emission of the light from the LED chips is preferably directed. In other words, the angular distribution of the light emission is preferably made more narrow. For this purpose a plurality of small lenses or a micro lens array may be used. These lenses or this micro lens array are preferably positioned in front of the LED chips such that they collect and concentrate the light emitted from the LED chips before the light is passed to the light collecting member (condenser lens). The single lenses or the lenses of the micro lens array have preferably dimensions which correspond to the dimensions of a LED chip. The interference filter is preferably placed in the direction of light propagation after the micro lens array. Also the averaging member is preferably placed after the plurality of lenses or the micro lens array.

The LED chips may be arranged on a plane substrate. However, the substrate may also be curved. In particular, the substrate may have a ellipsoid or parabolic surface, while that part of the surface which is not covered by LED chips is preferably made specularly or diffusely reflective.

The substrate having mounted the LED chips thereon, the averaging member, the filter, and/or the micro lens array may be made integral, for instance by means of molding.

According to an alternative embodiment, a light collecting member is not provided. In this case the averaging member is placed close to the plane in which the photographic original is positioned. The light from the LED chip array is preferably guided (in forward direction) by means of reflecting walls (which may be or not diffusely reflecting) towards the averaging member. The illuminated original is then projected by means of the projecting lens on the detecting member.

The acquisition device, in particular a photographic copying device or a scanner, preferably comprises mechanical means (conveying members, motors etc.) for sequentially transporting photographic originals to a position predefined for the projection onto the detecting member. This transport of the photographic original has to be synchronized with the control of the LED chips, for instance, the LED chips are only driven if a photographic original is in the predefined position. In this position LED chips of different color are driven color by color. In case of a photochemical converter (e.g. photographic paper), preferably additionally a mechanical transport mechanism is provided in order to intermittently (or continuously) convey an unexposed photochemical converting member (photographic paper) in the plane which is predefined for detection. Also this intermittent transport is preferably synchronized with the driving of the LED chips and the (intermittent) transport of the photographic originals.

In the following description of embodiments of the present invention further features of the present invention are disclosed. Features of different embodiments may be combined. Same reference signs refer to same components throughout the figures, if not otherwise mentioned.
- Fig. 1: illustrates a LED chip array;
- Fig. 2: illustrates schematically a photographic image acquisition device according to an embodiment of the present invention;
- Fig. 3: is a side view of an LED chip array with a micro lens array;
- Fig. 4: is an embodiment of a photographic image acquisition device having three LED chip arrays;
- Fig. 5: is a photographic image acquisition device having a reflective light integrator;
- Fig. 6: is a photographic image acquisition device without a condenser lens;
- Fig. 7: is an example for an arrangement of LED chips in an array;
- Fig. 8: is another example for an arrangement of LED chips in a multicolor array;
- Fig. 9: shows a cross section through a LED chip array.

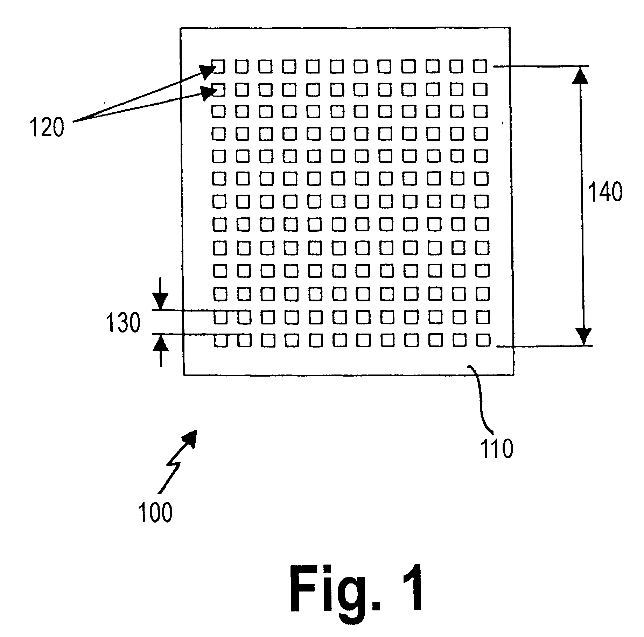

Fig. 1 shows an LED chip array 100 having a substrate 110 and a plurality of LED chips 120. The LED chips may have different size. The LED chips have, for instance, dimensions in the range of 0.2 mm to 0.5 mm. In this case the distance 130 between different LED chips may be about 0.5 mm to 1.0 mm. The LED chips may extend over a length 140 of several centimeters. In this case more than 100 LED chips may be arranged on the substrate 110.

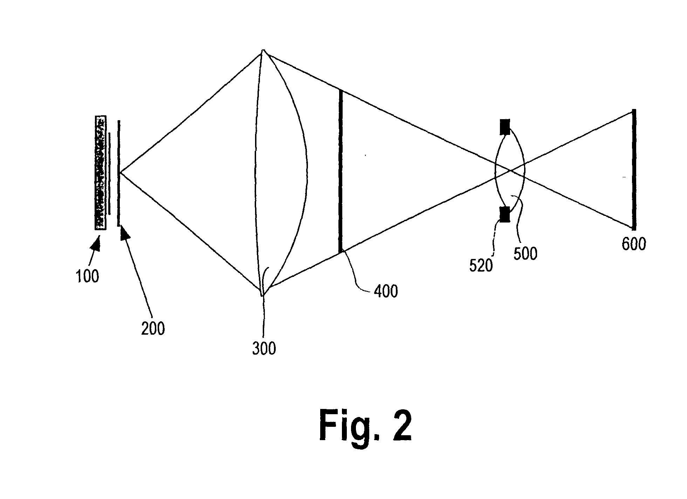

Fig. 2 shows an embodiment of a photographic image acquisition device according to the present invention. The light from an LED chip array 100 is smoothed or homogenized by a diffuser 200, which serves as an averaging member. For the optical construction shown in fig. 2, the diffuser 200 represents the plane from which the light originates. Accordingly the condenser lens 300 serving as a light collecting member is arranged. The condenser lens 300 is positioned such that the diffuser 200 is projected in the entrance pupil of the projecting lens 500. The entrance pupil is schematically shown as the aperture 520. The condenser lens collects the light from the diffuser 200 in order to fully illuminate a film (photographic original) in the film plane. The illuminated film is held by a schematically shown positioning or holding member 400 at the position indicated by the reference sign 400 and is projected by means of the projecting lens 500 in the sensor plane 600. In the sensor plane 600, a CCD or a photographic paper is placed.

The photographic medium positioning member according to the present invention may comprise a pressing mask and a supporting mask. A film is sandwiched between the supporting mask and the pressing mask and the pressing mask is pressed against the supporting mask in order to hold the film. Both masks comprise matching windows through which the light passes in order to allow a transmission of the light through the image part of the film.

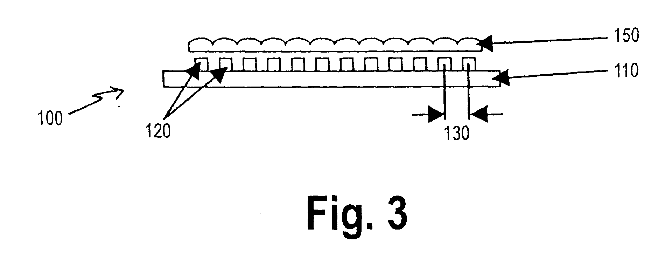

Fig. 3 shows a LED chip array 100 having a substrate 110, LED chips 120 and a micro lens array 150. The LED chips 110 project from the substrate and face the film plane. Each of the lenses of the micro lens array 150 is assigned to a LED chip such that one lens is above one LED chip. The distance between the LED chip and its corresponding micro lens corresponds to the order of magnitude of the distance 130 between two LED chips. After the micro lens array 150, interference filters (not shown) may be disposed.

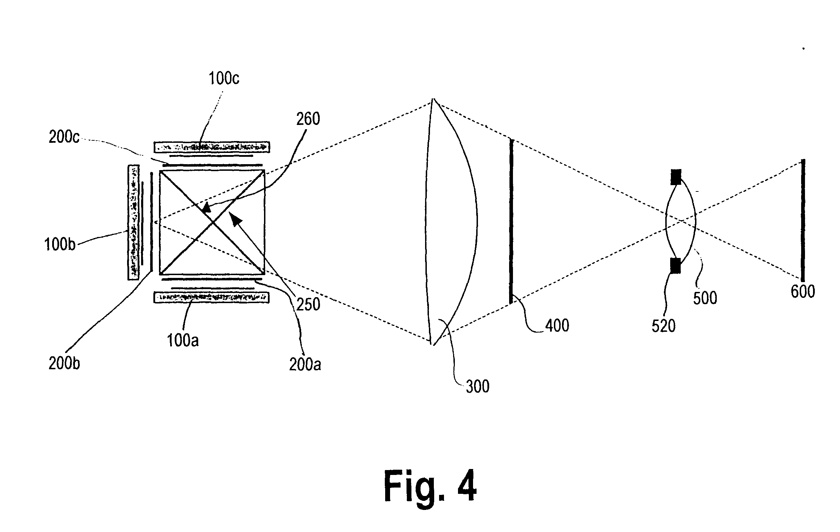

Fig. 4 is an embodiment, which combines the light of several LED arrays. In the example shown, three LED arrays 100a, 100b, and 100c are arranged in a rectangular manner. Diffusers 200a, 200b, and 200c are in front of the LED chip arrays 100a, 100b, and 100c, respectively in order to homogenize the light issuing from the respective LED chip arrays. LED chips of one color are only on one LED chip array. For instance, LED chips with the color red are on LED chip array 100a, LED chips with the color blue are on LED chip array 100b, and LED chips of the color green are on LED chip array 100c. In order to collect the light of all three LED chip arrays by means of the condenser lens 300, preferably dichroic mirrors 250 and 260 are used. For instance, the dichroic mirror 250 reflects the red light from the LED chip array 100a and lets pass the blue and green light from the LED chip arrays 100b and 100c. The optical arrangement is made such that the LED chip array 100a optically appears for the condenser and projecting arrangement to be at the position of the LED chip array 100b. Furthermore, the dichroic mirror 260 lets pass the blue and red light from the LED chip arrays 100b and 100a and reflects the green light from the LED chip array 100c. In summary, the light from the three arrays 100a, 100b, and 100c is combined by the dichroic mirrors as if the arrays were located at the same place. This allows the light intensity of each color to be increased, because the effective packing density of the chips is higher than in the case of a single LED array.

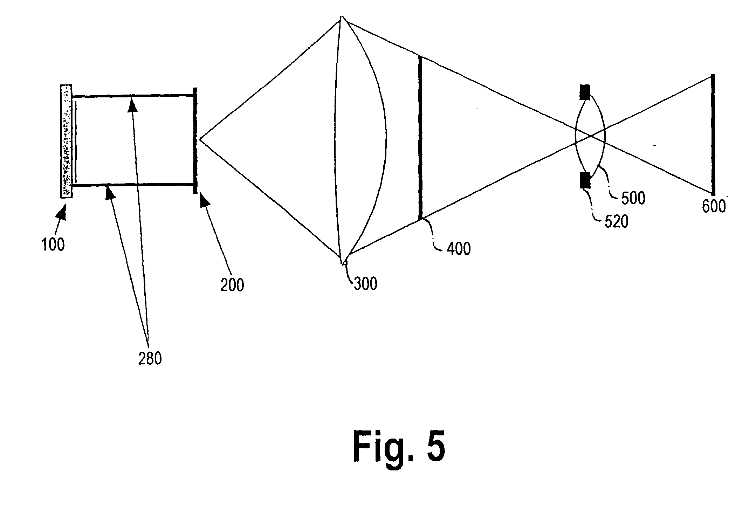

Fig. 5 shows an arrangement where the diffuser (averaging member) 200 is placed further away from the LED chip array 100 than in the arrangement of fig. 2. In the arrangement of fig. 2, the distance between the diffuser and the LED chip array is preferably within the range of 1-10 times of the distance between LED chips. In the arrangement of fig. 5, a light integrator with reflecting side walls 280 is provided in order to reflect the light issuing from the LED chip array 100. The reflecting wall 280 prevents a loss of light intensity, bundles the light issuing from the LED chip array by reflecting it and averages the light in case of multiple reflections at the side walls until the light reaches the diffuser 200. As in the embodiment of fig. 2, the diffuser 200 serves as the light source for the illumination and projecting arrangement. The same reference signs refer to the same components as in the figures before.

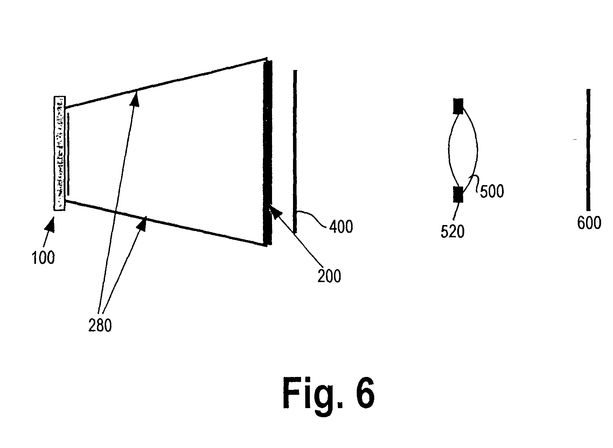

Fig. 6 shows an arrangement with a light integrator 280 with reflecting side walls. While the light integrator 280 of fig. 5 does not widen in the direction of light emission, the light integrator 280 of fig. 6 widens e.g. in a conical shape. Furthermore the projection and illumination arrangement is different in that no condenser lens is provided but the diffuser 200 is placed close to the film 400. Thus, the film 400 is directly illuminated by the light from the diffuser 200 and the illuminated film is projected by means of the projection lens 500 onto the detector 600. The input aperture of the light integrator 280 is preferably as close as possible to the LED chip array. While the input aperture of the light integrator in fig. 5 is equal to the output aperture of the integrator, where the light hits on the diffuser 200, this area is larger in fig. 6 in order to illuminate a diffuser which corresponds in size to the film to be illuminated. As a consequence, the intensity of the light emitted by the diffuser in fig. 6 is generally lower than the intensity of the light emitted by the diffuser 200 in fig. 5 provided the same LED chip array is used and controlled in the same way.

The LED chip arrays shown in the figs. 2, 5, and 6 are preferably multicolored LED chip arrays. This multicolored LED chip arrays comprise groups of LED chips wherein the LED chips of a group have all the same color.

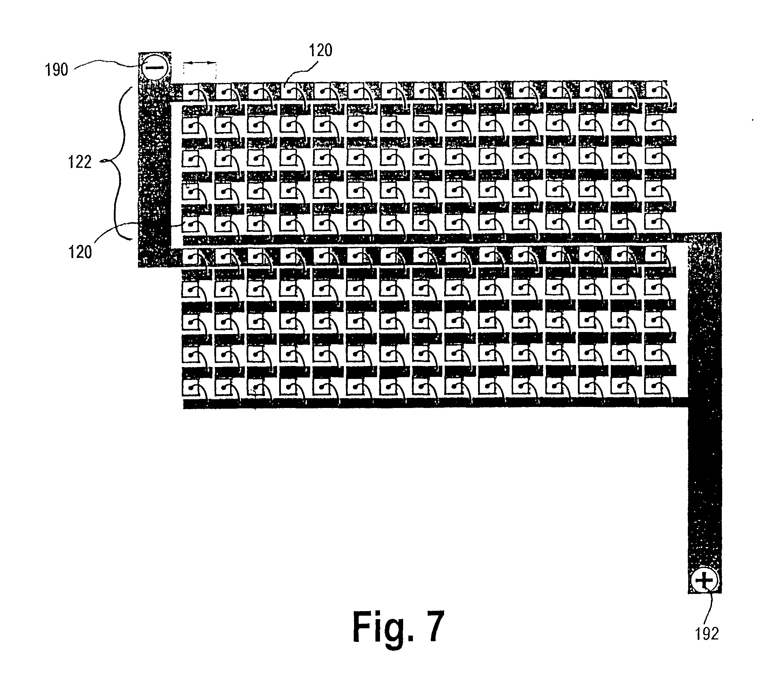

Fig. 7 shows an example for the arrangement of LED chips 120 in an array. There is a common cathode 190 and a common anode 192 for a multitude of parallel groups, consisting in LED chips connected in series. In this way a simultaneous turning on and off of the LED chips is possible. The LED chips 120 are connected in series of e.g. five LED chips. The number of LED chips in a series is constant for all LED chips in the LED chip array. In this way, the layout design is simplified and the control of the LED chips is facilitated. Typically, the forward voltage for one LED chip is between 1.5 and 4.5 V, depending on its color. And the voltage difference between the cathode 190 and the anode 192 is typically between 24 and 36 V. Thus a series of five (as shown in fig. 7) to ten LED chips represents a typical example. In order to illuminate a great number of LED chips at the same time, the series of LED chips are connected in parallel as shown in fig. 7. If necessary, protective resistances may be used, in particular if different series comprise different LED chips of different color. Also in this case, preferably, the number of LED chips in a series is kept constant and all LED chips of the series have the same color.

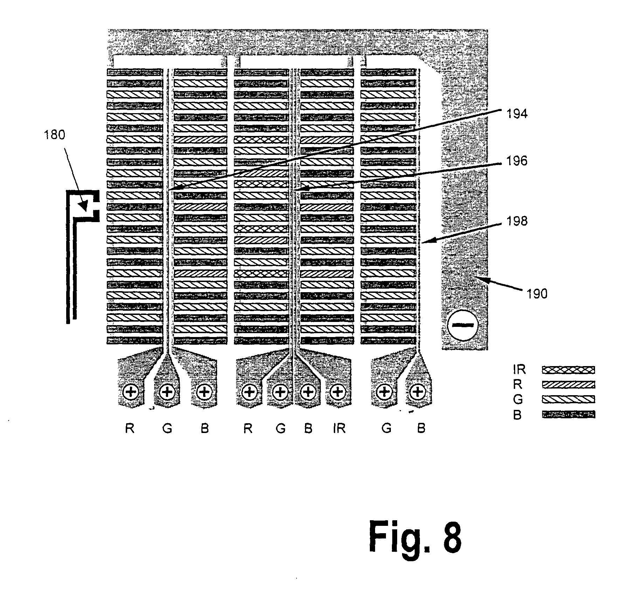

Fig. 8 shows an example for an LED chip array having LED chips of different colors. The LED chip array of fig. 8 has one common cathode 190 but a number of anodes (R, G, B, IR). The anodes R are for addressing and controlling LED chip series with LED chips of red color, the anode G is for controlling and addressing series of LED chips having a green color, the anode B is for addressing series of LED chips having a blue color, and the anode IR is for addressing series of LED chips having a infrared color. As shown in fig. 8, only a few infrared and red LED chip series are arranged in the LED chip array. This is due to the fact that the required light level is more easily attained with these LED chips than with green and blue LED chips. In this example the red LED chip series are not placed at the margin of the array. This is due to the fact that the center of the array is more important for the brightness in the detecting plane in the sense that the border of the array is partially blocked by the aperture 520. Furthermore the layout is simplified in that only two but not three anodes R have to be provided. In the center of the LED chip array, a plurality of LED chip series are connected in parallel. The LED chip series of all colors are connected in parallel in the center of the LED chip array, i.e. there are infrared, red, green, and blue LED chip series connected in parallel, which may be addressed in a sequence by using the IR, R, G, and B anode, respectively. In the example shown in fig. 8, one LED chip series comprises 5 LED chips and 20 infrared, 40 red, 230 green and 335 blue LED chips are positioned such that they are (2D-)spatially mixed as good as possible. The concentration of the infrared LED chips in the center simplifies the layout in that only one anode IR is necessary in order to control the infrared LED chips. In summary only 9 anodes are necessary to control the LED chip array. The reference number 194 shows three anode lines (conducting tracks) for controlling the colors red, green, and blue, the reference sign 196 shows four anode lines for controlling the colors red, green, blue, and infrared, and the reference sign 198 shows two anode lines for controlling the colors green and blue. Anodes belonging to the same color may be connected to each other (not shown in fig. 8), in order to finally have only one anode per color.

As already mentioned above, an appropriate temperature control is important to have a constant light emission profile and a constant spectrum and to guarantee a long life time of the chips. Typically, it is preferred to keep the temperature at the pn-junction at less than 100 °C. In order to achieve this, the control of the LED chips is preferably based on the temperature of the LED chip array or the substrate. This temperature is detected by a temperature sensor 180, which may be a NTC resistance. The signals of the temperature sensor 180 are fed into a controller, which controls the different LED chips such that the temperature of the LED chip array or the substrate is kept below a given maximum value. Alternatively or additionally, a cooling mechanism like a heat sink with a fan or using a cooling liquid may be controlled based on the temperature signals from the temperature sensor 180 in order to keep the temperature constant and in particular below a certain threshold value.

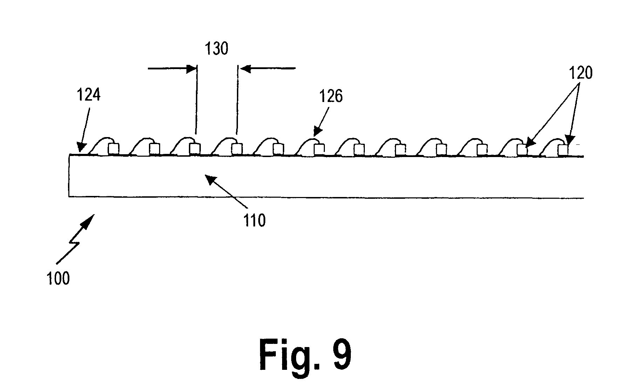

Fig. 9 shows a cross sectional view of a LED chip array. The LED chips 120 are for instance connected with their cathode to a portion of a conducting track 124 (depending on the LED chip, the polarity may also be inversed, i.e. the anode may be at the bottom). The anode of the LED chips is connected with a bond wire 126. The bond wire provides a contact to a portion of a conducting track 124. In other words, in this example the anode of the LED chips is connected with a conducting track via a bond wire and the cathode is directly connected with a conducting track. The example in fig. 9 shows all LED chips connected in series. The substrate 110 shown in fig. 9 is preferably as thin as possible in order to have low thermal resistance but sufficient in thickness in order to provide the necessary mechanical strength. A thickness of the substrate of the same order of magnitude as the dimensions of the LED chips is preferred. Preferably the thickness is may be 1 mm or less, e.g. about 0.5 mm. The substrate serves for both the mechanical support for the electric lines (conducting tracks) and the thermal contact to the LED chips.

## Claims

1. Photographic image acquisition device comprising:
a light source;
a photographic medium positioning member (400) for positioning a photographic medium at a predefined position;
a projecting lens (500) for projecting the photographic medium on a detecting member (600) for exposing said detecting member;
**characterised in that**
the light source comprises a LED chip array (100) having a plurality of LED chips (120) and a light transmitting and averaging member (200) is provided between the LED chip array and the predefined position.

2. Photographic image acquisition device of claim 1, wherein
the light transmitting and averaging member (200) is provided between the LED chip array (100) and a light collecting element (300), wherein the light collecting member as well as light transmitting and averaging member is arranged such that the light collecting element collects, for illuminating the predefined position of the photographic medium, light issuing from the light transmitting and averaging member.

3. Photographic image acquisition device of claim 1 or 2, wherein
the light transmitting and averaging member has a distance to the LED chip array greater than distances between LED chips of the plurality of LED chips having the same colour.

4. Photographic image acquisition device of claim 1 to 3, wherein
the LED array comprises LED chips of different colors having different forward voltages, LED chip series are formed by a number of LED chips of said plurality of LED chips which are connected in series and have the same color, and said LED chip series are connected in parallel, the number of LED chips in a series being constant for the LED chips series of different colors and chosen such that a given LED array driving voltage is suitable to drive the LED chip series of different colors.

5. Photographic image acquisition device of claim 1 to 4, wherein
LED chips of different colors are provided and said detecting member is exposed in a sequence, color by color by said LED chips, and wherein the ratio between the numbers of LED chips of each color is optimised such that a sum of color specific times of exposure of the detecting member is minimized.

6. Photographic image acquisition device of claim 1 to 5, wherein
the LED array comprises LED chips of different colors and the LED chips of at least most of the different colors are spatially mixed in the LED chip array such that there is a balanced distribution of all colors in at least the major part of the LED chip array.

7. Photographic image acquisition device of claim 1 to 6, wherein the light source comprises more than one LED chip array (100a, 100b, 100c), the LED chips of different arrays having a different spectral emission range, at least one spectral sensitive reflector, which reflects a part of the spectrum and lets pass another part of the spectrum, being arranged and having spectral transmission and reflection characteristics such that the light issuing from the different arrays follows the same one light path towards the light collecting element after the spectral sensitive reflector.

8. Photographic image acquisition device of claim 1 to 7, wherein the LED chip array comprises a heat conductive substrate (110) to which the LED chips are thermally connected, and which is thermally connected to a heat sink.

9. Photographic image acquisition device of claim 1 to 8, wherein a plurality of LED chips of the same spectral emission characteristics are electrically connected such that they emit light at the same time.

10. Photographic image acquisition device of claim 1 to 9, wherein a lens array comprising a plurality of lenses respectively assigned to one of the plurality of LED chips is arranged between the LED chip array and the light transmitting and averaging member.

11. Photographic image acquisition device of claim 1 to 10, wherein a light guiding and reflecting member is arranged between the LED chip array and the light transmitting and averaging member, said guiding and reflecting member is arranged to receive the light emitted from the LED chip array and to guide the light to the light transmitting and averaging member by reflecting the light at surfaces of the light guiding and reflecting member.
